# EUROPEAN PATENT APPLICATION

(11) **EP 3 226 151 A1**
(43) Date of publication of application: **04.10.2017**
(21) Application number: 15863769.4
(22) Date of filing: 06.10.2015
(51) Int. Cl.: G06F 17/30, G06F 3/01, G06F 3/048, G06F 3/0488, G06F 13/00

(54) **INFORMATION PROCESSING DEVICE, INFORMATION PROCESSING METHOD, AND PROGRAM**

(30) Priority: 26.11.2014 JP 2014238607
(71) Applicant: Sony Corporation, Tokyo 108-0075 (JP)
(72) Inventor: TAKAHASHI, Kei, Tokyo 108-0075 (JP)
(74) Representative: MFG Patentanwälte Meyer-Wildhagen Meggle-Freund Gerhard PartG mbB
(86) International application number: PCT/JP2015/078265
(87) International publication number: WO 2016/084481

(57) **Abstract**

[Object] To provide a device and method of information processing, and a program, capable of displaying a candidate selected by incorporating a user's intention, relating to received information.

[Solution] An information processing device including: a selection information acquisition unit configured to acquire partial information selected by a first user from first information received from another device; and a display control unit configured to generate display control information used to display a selection candidate relating to the first information on the basis of the acquired partial information.

## Description

### Technical Field

The present disclosure relates to an information processing device, a method of information processing, and a program.

### Background Art

Techniques for transmitting and receiving information including, for example, text, such as e-mail or short message service (SMS), between a plurality of devices have been recently used.

Further, techniques allowing a user to generate easily information to be transmitted to other users have also been developed. In one example, Patent Literature 1 discloses a technique for automatically generating a reply message candidate by using a message received from an external device.

### Citation List

### Patent Literature

- Patent Literature 1:: JP 2014-134903A

### Disclosure of Invention

### Technical Problem

However, according to the technique disclosed in Patent Literature 1, a reply message candidate is generated depending only on a received message. Thus, the above-mentioned technique will generate a candidate independently of the intention of a user who receives the message.

In view of this, the present disclosure provides a novel and improved device and method of information processing, and a program, capable of displaying a candidate selected by incorporating a user's intention, relating to received information.

### Solution to Problem

According to the present disclosure, there is provided an information processing device including: a selection information acquisition unit configured to acquire partial information selected by a first user from first information received from another device; and a display control unit configured to generate display control information used to display a selection candidate relating to the first information on the basis of the acquired partial information.

Further, according to the present disclosure, there is provided a method of information processing, the method including: acquiring partial information selected by a first user from first information received from another device; and generating display control information used to display a selection candidate relating to the first information on the basis of the acquired partial information.

Further, according to the present disclosure, there is provided a program for causing a computer to function as: a selection information acquisition unit configured to acquire partial information selected by a first user from first information received from another device; and a display control unit configured to generate display control information used to display a selection candidate relating to the first information on the basis of the acquired partial information.

### Advantageous Effects of Invention

According to the present disclosure as described above, it is possible to display a candidate selected by incorporating the user's intention, relating to the received information. Moreover, the advantageous effects described herein are not necessarily limited and any of the effects described in the present disclosure may be applied.

### Brief Description of Drawings

[FIG. 1] FIG. 1 is a diagram illustrated to describe a configuration example of an information processing system according to an embodiment of the present disclosure.
[FIG. 2] FIG. 2 is a functional block diagram illustrating a configuration example of a wristwatch type device 10 according to the present embodiment.
[FIG. 3] FIG. 3 is a diagram illustrated to describe a display example of a reception message and an auto-generation reply candidate according to the present embodiment.
[FIG. 4] FIG. 4 is a diagram illustrated to describe a display example of a selective-generation reply candidate according to the present embodiment.
[FIG. 5] FIG. 5 is a diagram illustrated to describe an example in which a user selects a word included in a reception message.
[FIG. 6] FIG. 6 is a diagram illustrated to describe a configuration example of a selection history DB 130 according to the present embodiment.
[FIG. 7] FIG. 7 is a diagram illustrated to describe a display example of a touch keyboard input screen according to the present embodiment.
[FIG. 8] FIG. 8 is a diagram illustrated to describe an example of inputting a character on the touch keyboard input screen.
[FIG. 9] FIG. 9 is a diagram illustrated to describe an example of selecting a prediction candidate on the touch keyboard input screen.
[FIG. 10] FIG. 10 is a flowchart showing a part of an operation according to the present embodiment.
[FIG. 11] FIG. 11 is a flowchart showing a part of the operation according to the present embodiment.
[FIG. 12] FIG. 12 is a diagram illustrated to describe a hardware configuration of a wristwatch type device 10 according to the present embodiment.
[FIG. 13] FIG. 13 is a diagram illustrated to describe a display example of a display screen according to a modification example of the present disclosure.

### Mode(s) for Carrying Out the Invention

Hereinafter, (a) preferred embodiment(s) of the present disclosure will be described in detail with reference to the appended drawings. In this specification and the appended drawings, structural elements that have substantially the same function and structure are denoted with the same reference numerals, and repeated explanation of these structural elements is omitted.

Further, in this specification and drawings, a plurality of components having substantially the same functional configuration are sometimes distinguished by appending different alphabet characters following identical reference numerals. In one example, like a touch key 44a and a touch key 44b, a plurality of components having substantially the same functional configuration are distinguished as necessary. However, in a case where it is not necessary to particularly distinguish each of a plurality of components having substantially the same functional configuration, only the same reference numeral is appended. In one example, in the case where there is no particular significance to distinguish between the touch key 44a and the touch key 44b, they are simply referred to as a touch key 44.

Further, the "mode for carrying out the invention" is described in accordance with the order of items given below.
1. Basic configuration of information processing system
1-1. Basic configuration
1-2. Summary of problems
2. Detailed description of embodiment
2-1. Configuration
2-2. Operation
2-3. Advantageous effects
3. Hardware configuration
4. Modification example

### <<1. Basic configuration of information processing system>>

### <1-1. Basic configuration>

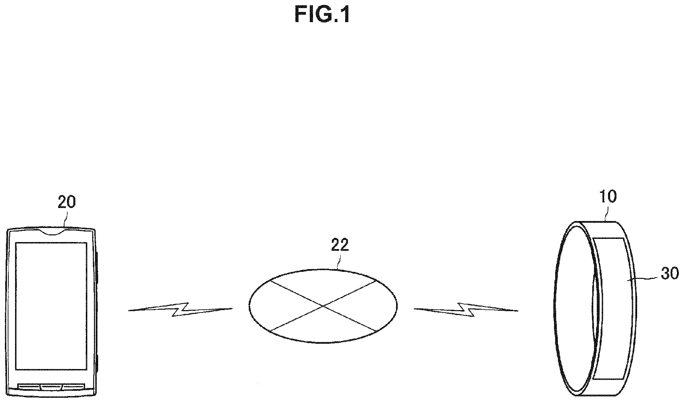

The present disclosure may be implemented in various modes, as described in detail as an example in the item "2. Detailed description of embodiment". The basic configuration of an information processing system according to the present embodiment is now described with reference to FIG. 1.

As illustrated in FIG. 1, the information processing system according to the present embodiment includes a wristwatch type device 10, an information processing terminal 20, and a communication network 22.

### [1-1-1. Wristwatch type device 10]

The wristwatch type device 10 is an example of an information processing device in the present disclosure. This wristwatch type device 10 is a device that a user can use while wearing it on the arm. As illustrated in FIG. 1, the wristwatch type device 10 has, for example, a touch panel display that displays a display screen. In addition, the wristwatch type device 10 can transmit and receive information to and from the information processing terminal 20 via the communication network 22, for example, by wireless communication. In one example, the wristwatch type device 10 can receive a message used in e-mail or online chat from the information processing terminal 20, or can transmit a message created by the user to the information processing terminal 20.

Further, the wristwatch type device 10 can be equipped with a touch keyboard used to input a character by a touch operation on the display screen or speech recognition software used to recognize the user's speech.

### [1-1-2. Information processing terminal 20]

The information processing terminal 20 is an example of "another device" in the present disclosure. The information processing terminal 20 has, for example, a display for displaying a display screen, a network interface for connecting to the communication network 22, and an input device for enabling the user to input. The information processing terminal 20 may be, for example, a mobile phone such as smartphones, a tablet terminal, a personal computer (PC), or the like.

### [1-1-3. Communication network 22]

The communication network 22 is a wired or wireless transmission path of information transmitted from a device connected to the communication network 22. In one example, the communication network 22 may include a public line network such as telephone network, the Internet, and satellite communication network, various local area networks (LANs) including Ethernet (registered trademark), a wide area network (WAN), or the like . In addition, the communication network 22 may include a leased line network such as internet protocol-virtual private network (IP-VPN).

### <1-2. Summary of problems>

The configuration of the information processing system according to the present embodiment has been described. However, it is desirable for the wristwatch type device 10 described above to have the ability to create a reply message to a message received from the information processing terminal 20. Here, the reply message is text information including information used to correlate it with a reception message.

An example of a way of generating a reply message is considered to include a way of using a touch keyboard or speech input. However, these inputting ways place a heavy burden on the user. Typically, the wristwatch type device 10 has a small display, and so a small touch keyboard is displayed. Thus, it is difficult for the user to select a key on the touch keyboard and to input a character. In addition, the touch keyboard is typically necessary to be input in units of one character, which leads to increase in the number of operations by the user.

Further, the speech input uses speech recognition software that typically has limitation on the accuracy for recognition. Thus, even when the user inputs speech, a desired text fails to be obtained and so it may be necessary for the user to repeat such an input operation many times.

For the reasons described above, it is convenient for the user that a reply candidate relating to a received message is generated automatically and is displayed to be selectable on the display screen.

In the known art, a technique is developed in which a reply candidate is automatically generated by analyzing a received message and is presented to the user. However, in this technique, a candidate for a reply message is generated depending only on a received message, and so a reply candidate undesirable for the user is likely to be presented. In particular, when a long message is received from the other party or two or more subjects are included in the message from the other party, an undesirable reply candidate is more likely to be presented.

Thus, in consideration of the above circumstances as one viewpoint, it has led to development of the wristwatch type device 10 according to the present embodiment. The wristwatch type device 10 according to the present embodiment can display a reply candidate in which the user's intention relating to a received message is incorporated. Such embodiments are described in detail one by one.

### «2. Detailed description of embodiment»

### <2-1. Configuration>

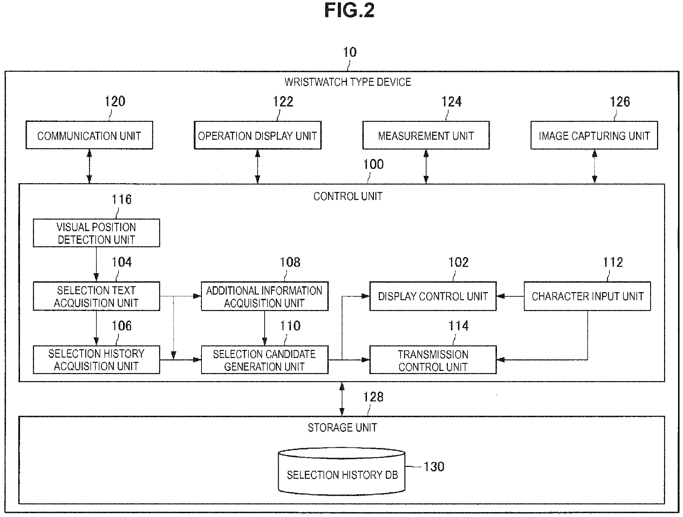

The configuration according to the present embodiment is now described in detail. FIG. 2 is a functional block diagram illustrating the configuration of the wristwatch type device 10 according to the present embodiment. As illustrated in FIG. 2, the wristwatch type device 10 is configured to include a control unit 100, a communication unit 120, an operation display unit 122, a measurement unit 124, an image capturing unit 126, and a storage unit 128.

### [2-1-1. Control unit 100]

The control unit 100 controls the entire operation of the wristwatch type device 10 using hardware such as a central processing unit (CPU) 150 and a random access memory (RAM) 154 described later which are built in the wristwatch type device 10. In addition, as illustrated in FIG. 2, the control unit 100 is configured to include a display control unit 102, a selection text acquisition unit 104, a selection history acquisition unit 106, an additional information acquisition unit 108, a selection candidate generation unit 110, a character input unit 112, a transmission control unit 114, and a visual position detection unit 116.

### [2-1-2. Display control unit 102]

### (2-1-2-1. Display control example 1)

The display control unit 102 causes the operation display unit 122 described later to display various kinds of information. In one example, in the case where a message is received from the information processing terminal 20, the display control unit 102 causes the operation display unit 122 to display the received message.

Further, the display control unit 102 generates display control information used to display one or more auto-generation reply candidates that are generated by the selection candidate generation unit 110 described later, and the display control unit 102 causes the operation display unit 122 to display the auto-generation reply candidates on the basis of the generated display control information. Moreover, the auto-generation reply candidate is, for example, text.

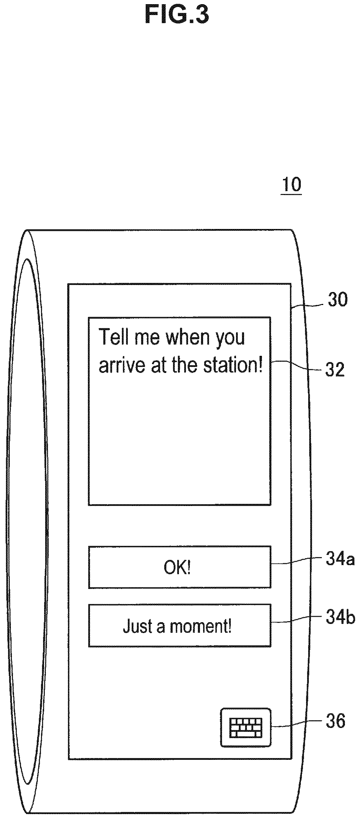

Here, the function mentioned above is described in more detail with reference to FIG. 3. FIG. 3 is a diagram illustrated to describe a display example of a display screen (display screen 30) including a reception message and an auto-generation reply candidate. Although details will be described later, FIG. 3 illustrates a display example in which, in the case where a message "Tell me when you arrive at the station!" is received, the candidate generation unit 110 generates a plurality of auto-generation reply candidates ("OK!" and "Just a moment!").

As illustrated in FIG. 3, the display screen 30 includes, for example, a reception message display column 32, a selection window 34 for a plurality of auto-generation reply candidates, and a touch keyboard input button 36. Here, the reception message display column 32 is an area for displaying the message received from the information processing terminal 20. In addition, the selection window 34 for auto-generation reply candidate is a display area in which the user can select the auto-generation reply candidate generated by the selection candidate generation unit 110 as a reply candidate relating to the reception message. The selection window 34 for auto-generation reply candidate is displayed on the basis of the display control information generated by the display control unit 102. Moreover, the auto-generation reply candidate is basically generated as the reply message in its entirety (full text). The auto-generation reply candidate is not limited to this example, and may be generated as one sentence or one or more clauses of the reply message.

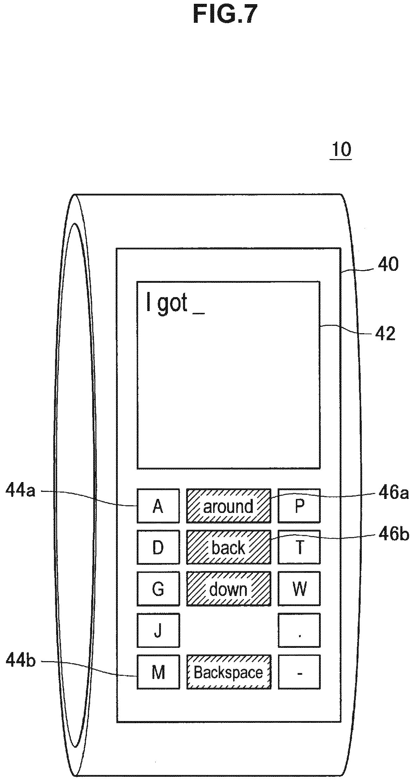

Further, the touch keyboard input button 36 is a button that allows the user to input a reply message using the touch keyboard. When the user selects the touch keyboard input button 36, the display control unit 102 causes the operation display unit 122 to display, for example, a touch keyboard input screen 40 as illustrated in FIG. 7, instead of the display screen 30. The details of the touch keyboard input screen will be described later.

### (2-1-2-2. Display control example 2)

Further, in the case where the selection candidate generation unit 110 described later generates a selective-generation reply candidate, the display control unit 102 generates display control information used to display the generated selective-generation reply candidate. Then, the display control unit 102 causes the operation display unit 122 to display the selective-generation reply candidate, instead of the displayed auto-generation reply candidate, on the basis of the generated display control information. Moreover, the selective-generation reply candidate is an example of a selection candidate in the present disclosure.

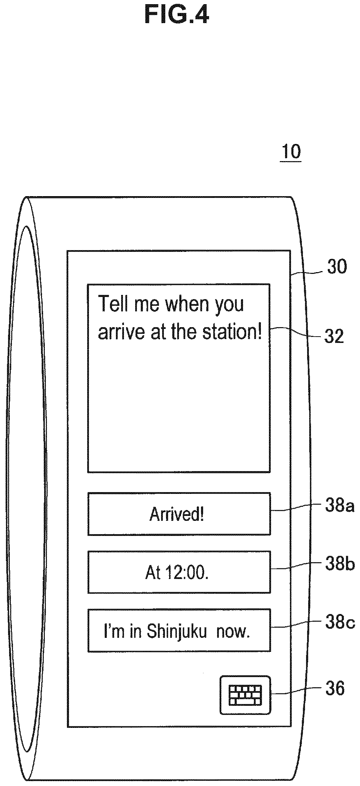

The function described above is now described in more detail with reference to FIG. 4. FIG. 4 is a diagram illustrated to describe an example of a display screen that is updated in the case where the selection candidate generation unit 110 generates a selective-generation reply candidate in the state of the display screen 30 shown in FIG. 3. Moreover, although details will be described later, FIG. 4 illustrates an example of display in a case where the selection candidate generation unit 110 generates a plurality of selective-generation reply candidates ("Arrived!", "At 12:00.", and "I'm in Shinjuku now.") in the case where the user selects "arrive" in the reception message.

As illustrated in FIG. 4, the display control unit 102 causes a selection window 38 for a plurality of selective-generation reply candidates, instead of the selection display 34 for the plurality of auto-generation reply candidates, to be displayed on the display screen 30. Here, the selection window 38 for the selective-generation reply candidate is a display area in which the user can select the selective-generation reply candidate generated by the selection candidate generation unit 110 as a reply candidate relating to the reception message. The selection window 38 for the selective-generation reply candidate is displayed on the basis of the display control information generated by the display control unit 102. Moreover, the selective-generation reply candidate is basically generated as the reply message in its entirety (full text), but it is not limited to this example, and it may be generated as one sentence or one or more clauses of the reply message. In the following description, the auto-generation reply candidate and the selective-generation reply candidate are collectively referred to as a reply candidate unless they are necessary to be particularly distinguished.

### [2-1-3. Selection text acquisition unit 104]

The selection text acquisition unit 104 is an example of a selection information acquisition unit in the present disclosure. The selection text acquisition unit 104 acquires a text portion selected by the user from the received message. Moreover, the text portion is an example of "partial information" in the present disclosure.

More specifically, the selection text acquisition unit 104 can detect the text portion selected by the user from the reception message on the basis of a touch operation by the user on the display screen, thereby acquiring the text portion. In one example, in the case where the user taps on the displayed reception message, the selection text acquisition unit 104 acquires a word at the tapped position as the text portion selected by the user. Moreover, the text portion may be a word or a character string in which a plurality of words are concatenated. In addition, in the case where the language of the reception message is, for example, Japanese or Chinese, the text portion may be, for example, one morpheme that is subjected to morphemic analysis, or a character string in which two or more morphemes are concatenated.

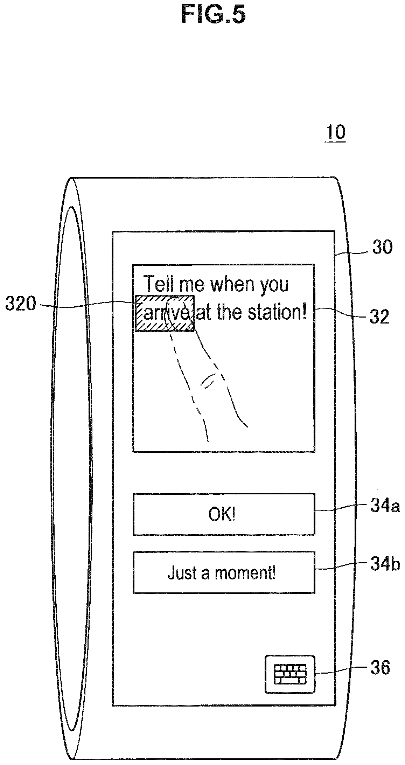

Here, the function of the selection text acquisition unit 104 is now described in more detail with reference to FIG. 5. FIG. 5 is a diagram illustrated to describe an example in which the user taps on a text portion included in the displayed reception message. In the example illustrated in FIG. 5, the user taps on the word "arrive" 320 in the reception message display column 32. Thus, the selection text acquisition unit 104 acquires the word 320 as the text portion selected by the user.

Alternatively, in the case where the user performs a tracing operation on the displayed reception message, the selection text acquisition unit 104 can acquire a plurality of words located in the traced area as the selected text portion.

### (2-1-3-1. Modification example 1)

Further, as a modification example, the selection text acquisition unit 104 can acquire the text portion selected by the user on the basis of a scrolling operation by the user on the display area on which the reception message is displayed. In one example, whenever the user scrolls the display area, the selection text acquisition unit 104 can sequentially acquire a plurality of words located in the central portion of the display area as the selected text portion.

### (2-1-3-2. Acquisition Example 2)

Further, as another modification example, the selection text acquisition unit 104 can acquire the text portion selected by the user on the basis of a visual position of the user detected by the visual position detection unit 116 described later in the display area of the reception message. In one example, the selection text acquisition unit 104 acquires, as the selected text portion, a word that is located at the visual position detected by the visual position detection unit 116 from the reception message. Moreover, the selection text acquisition unit 104 acquires, as the selected text portion, a word that is detected by the visual position detection unit 116 and is observed by the user for the longest time within a predetermined time period from among a plurality of words included in the reception message.

This modification example can eliminate the user from performing the touch operation to select the text portion. Thus, in one example, even when the wristwatch type device 10 has a small display, the user can select a desired text portion without any difficulty.

Moreover, in this modification example, the selection text acquisition unit 104 can sequentially acquire other text portions depending on the movement of the user's line of sight. In one example, there may be a case where the visual position detection unit 116 detects that the user turns away the line of sight from the display screen and then observes again the display area of the reception message. In this case, the selected text acquisition unit 104 can acquire a word positioned at a newly detected visual position as a new selected text portion.

### [2-1-4. Selection history acquisition unit 106]

The selection history acquisition unit 106 acquires the history of the reply message transmitted previously in association with the text portion acquired by the selection text acquisition unit 104 from a selection history DB 130.

### (2-1-4-1. Selection history DB 130)

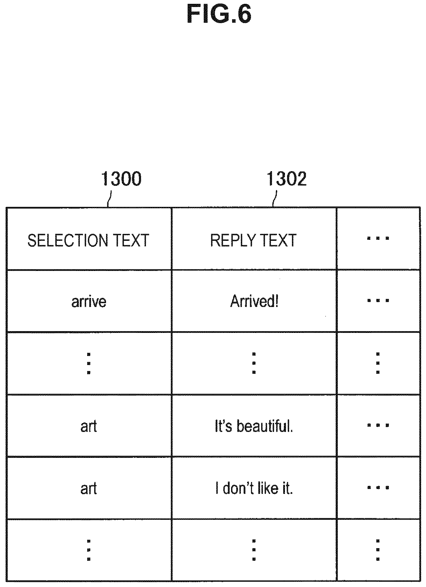

The selection history DB 130 is a database that stores the text portion selected from the received message by the user and a reply message transmitted after selection of the text portion in association with each other. Here, a configuration example of the selection history DB 130 is described with reference to FIG. 6. As illustrated in FIG. 6, in one example, a selection text 1280 and a reply text 1282 are recorded in the selection history DB 130 in association with each other. Here, the text portion selected by the user in the message received previously is recorded in the selection text 1280. In addition, the reply message transmitted after selection of the text portion is recorded in the reply text 1282.

### [2-1-5. Additional information acquisition unit 108]

The additional information acquisition unit 108 acquires additional information having an attribute depending on the text portion acquired by the selection text acquisition unit 104.

### (2-1-5-1. Acquisition example 1)

Here, the additional information may include, for example, position information. In one example, the additional information acquisition unit 108 acquires, as the additional information, a positioning signal received from a positioning satellite such as global positioning system (GPS) or current position information specified on the basis of base station information received from a base station located in the surroundings.

Alternatively, the additional information acquisition unit 108 can also acquire, as the additional information, position information corresponding to map information selected by the user on the display screen. In one example, the additional information acquisition unit 108 may acquire, as the additional information, position information corresponding to the position tapped by the user in the user interface (UI) of an additionally displayed map.

### (2-1-5-2. Acquisition example 2)

Further, the additional information may include date and time information. In one example, the additional information acquisition unit 108 acquires, as the additional information, current time information calculated by the system clock of the wristwatch type device 10 or current time information received from a time server (not shown) connected to the communication network 22.

Alternatively, the additional information acquisition unit 108 may acquire, as the additional information, time information selected by the user in the UI of the additionally displayed clock or date and time information selected by the user in a calendar UI.

### (2-1-5-3. Acquisition example 3)

Further, the additional information may include information relating to a user who uses the information processing terminal 20 (hereinafter also referred to as an opposite user). In one example, the additional information acquisition unit 108 acquires, as the additional information, relationship information indicating the relationship between the user of the wristwatch type device 10 and the opposite user. The relationship information is specified by a human relationship DB or a social graph that is stored in the storage unit 128 or another device (not shown) connected to the communication network 22. Here, the relationship information is, for example, information indicating that two users are family members, friends, work relationships, or not acquaintances. Alternatively, the relationship information may be information indicating the degree of intimacy between two users.

### (2-1-5-4. Acquisition example 4)

Further, the additional information may include a history of input information of the user in a predetermined service or a predetermined application. In one example, the additional information acquisition unit 108 acquires, as the additional information, the history of input text of the user in a predetermined service such as a social networking service (SNS) from a server (not shown) that manages the predetermined service. Alternatively, the additional information acquisition unit 108 acquires, as the additional information, the history of the input text of the user in a predetermined application such as a mail application.

### (2-1-5-5. Acquisition example 5)

Further, the additional information may include a result obtained by recognizing the action of the user. In one example, the additional information acquisition unit 108 recognizes the current action state of the user such as, for example, that the user is running, riding in a vehicle, and riding on a train, on the basis of a measurement result such as acceleration measured by the measurement unit 124. Then, the additional information acquisition unit 108 acquires the recognized result as the additional information.

### (2-1-5-6. Acquisition example 6)

Further, the additional information may include schedule information of the user. In one example, the additional information acquisition unit 108 acquires, as the additional information, the user's current schedule information stored in the storage unit 128 or a predetermined server connected to the communication network 22.

### (2-1-5-7. Acquisition example 7)

Further, the additional information may include biological information of the user. In one example, the additional information acquisition unit 108 acquires, as the additional information, biological information of the user, which is measured by the measurement unit 124. In addition, the additional information acquisition unit 108 can acquire, as the additional information, biological information of the user, which is stored in the storage unit 128 or a predetermined server. Here, the biological information is information indicating one or more of, for example, a pulse, a breathing pattern, a body temperature, myoelectricity, and a brain wave.

### (2-1-5-8. Acquisition example 8)

Further, the additional information may include a history of messages transmitted to and received from the information processing terminal 20. In one example, the additional information acquisition unit 108 acquires, as the additional information, a reply message transmitted in response to a message received from the information processing terminal 20 immediately before the received message. Moreover, the message received previously is an example of second information in the present disclosure.

Moreover, the additional information is not limited to the types described above, and may include other types of information. In one example, the additional information may include traffic information such as road congestion information and train delay information, or weather information.

### [2-1-6. Selection candidate generation unit 110]

### (2-1-6-1. Generation of auto-generation reply candidate)

The selection candidate generation unit 110, when receiving a message from the information processing terminal 20, generates one or more auto-generation reply candidates on the basis of the reception message. In one example, the selection candidate generation unit 110 checks whether a predetermined text such as a predetermined word is included in the reception message. Then, if the predetermined text is included, the selection candidate generation unit 110 generates, as the auto-generation reply candidate, one or more regular reply candidates stored, for example, in the storage unit 128 in association with a predetermined text.

Alternatively, the selection candidate generation unit 110 performs semantic analysis of the reception message by using, for example, a pattern recognition technique, and generates an auto-generation reply candidate depending on the analysis result. In one example, in the case where pattern recognition for the reception message fails, the selection candidate generation unit 110 can also generate a fixed text such as "OK" as the auto-generation reply candidate.

### (2-1-6-2. Generation of selective-generation reply candidate)

In addition, in the case where the user selects a text portion included in the displayed reception message, the selection candidate generation unit 110 generates one or more selective-generation reply candidates. This generation is based on the text portion acquired by the selection text acquisition unit 104, the selection history acquired by the selection history acquisition unit 106, and the additional information acquired by the additional information acquisition unit 108. In one example, in the case where the selection history acquisition unit 106 acquires the history of the reply message associated with the text portion acquired by the selection text acquisition unit 104, the selection candidate generation unit 110 generates individual reply messages included in the acquired history as the selection generation reply candidate.

Here, the function described above is described in more detail with reference to FIG. 6. In the registration example of the selection history DB 130 illustrated in FIG. 6, the user selects the word "arrive" in the message received previously and then "Arrived!" is transmitted as a reply message to this reception message. Thus, as illustrated in FIG. 5 for example, when the user selects "arrive" from a newly received message, the selection candidate generating unit 110 generates "Arrived!" as one of the selective-generation reply candidates.

Further, the selection candidate generation unit 110 can generate a selective-generation reply candidate on the basis of the additional information acquired by the additional information acquisition unit 108.

### - Generation example 1

In one example, the selection candidate generation unit 110 can generate a selective-generation reply candidate including position information acquired as the additional information by the additional information acquisition unit 108. In one example, an event in which the reception message is "Where are you?" and the user selects, for example, the word "Where" from the reception message or selects the full text of the reception message is contemplated. In this event, in the case where position information indicating the current position is acquired as the position information, the selection candidate generation unit 110 generates a selective-generation reply candidate including the acquired current position information, such as "In front of the post office.", for example.

### - Generation example 2

Further, the selection candidate generation unit 110 can generate the selective-generation reply candidate depending on the relationship information between the user and the opposite user, which is acquired as the additional information by the additional information acquisition unit 108. In one example, in a case where the acquired relationship information indicates that the user and the opposite user are in a work relationship or that the degree of familiarity is low, the selection candidate generation unit 110 generates the selective-generation reply candidate in a formal expression. In addition, in the case where the acquired relationship information indicates that the user and the opposite user are family members or friends, or indicates that the degree of familiarity is high, the selection candidate generation unit 110 generates the selective-generation reply candidate in an informal expression such as an expression including slang, for example.

In one example, an event in which the reception message is "Thank you." and the user selects, for example, the word "Thank" from the reception message or selects the full text of the reception message is contemplated. In this event, in the case where the acquired relationship information indicates that the user and the opposite user are in a work relationship, the selection candidate generation unit 110 generates the selective-generation reply candidate such as "You are welcome.", for example. In addition, in the case where the acquired relationship information indicates that the user and the opposite user are friends, the selection candidate generation unit 110 generates the selective-generation reply candidate such as "np : p", for example.

### - Generation example 3

Further, the selection candidate generation unit 110 can generate a selective-generation reply candidate depending on traffic information acquired as the additional information by the additional information acquisition unit 108. In one example, an event in which the reception message is "When will you come?" and the user selects, for example, the word "come" from the reception message or selects the full text of the reception message is contemplated. In this event, the selection candidate generation unit 110 predicts the arrival time, on the basis of current position information, destination position information, and road congestion information, which are acquired by the additional information acquisition unit 108. Then, in the case where the predicted arrival time is "7 p.m.", the selection candidate generation unit 110 generates a selective-generation reply candidate including information on the predicted arrival time such as "About 7 p.m.", for example.

Moreover, in one modification example, the selection candidate generation unit 110 can also generate a selective-generation reply candidate depending on a user's action recognition result and traffic information acquired by the additional information acquisition unit 108. In one example, in the case where the user's action recognition result acquired by the additional information acquisition unit 108 is "riding in a vehicle", the selection candidate generating unit 110 may generate the selective-generation reply candidate by predicting the arrival time on the basis of the road congestion information acquired by the additional information acquisition unit 108. In addition, in the case where the user's action recognition result obtained by the additional information acquisition unit 108 is "riding on a train", a selective-generation replay candidate may be generated by predicting the arrival time on the basis of the train time information and train delay information.

### - Generation example 4

Further, the selection candidate generation unit 110 can generate a selective-generation reply candidate by using a history of input information of a user in a predetermined service or a predetermined application, which is acquired as the additional information by the additional information acquisition unit 108. In one example, an event in which the reception message is "Will you come tomorrow?", and the user selects, for example, the word "come" from the reception message or selects the full text of the reception message is contemplated. In this event, in one example, in the case where the user replies, "Of course.", to the same reception message as above in the predetermined SNS, the selection candidate generation unit 110 generates the same reply message (i.e., "Of course.") as the selective-generation reply candidate.

Moreover, in one modification example, the selection candidate generation unit 110 can generate the selective-generation reply candidate by using a history of input information in only a service or application currently used (for exchanging a message with the opposite user) by the user. In one example, an event in which the reception message is "Will you come tomorrow?", and the user replies previously, "Of course.", to the same reception message as above in an SNS or replies previously, "I'd be grad to.", to the same reception message as above in an application (e.g., e-mail) is contemplated. In addition, in the case where the user currently uses the application, the selection candidate generation unit 110 generates "I'd be glad to." as the selective-generation reply candidate.

### - Generation example 5

Further, the selection candidate generation unit 110 can generate the selective-generation reply candidate depending on the user's action recognition result acquired as the additional information by the additional information acquisition unit 108. In one example, an event in which the reception message is "What are you doing now?", and the user selects, for example, the word "doing" from the reception message or selects the full text of the reception message is contemplated. In this event, in the case where the user's action recognition result acquired by the additional information acquisition unit 108 indicates "running now", the selection candidate generating unit 110 generates a selective-generation reply candidate including the acquired action recognition result, such as "Running now", for example.

### - Generation example 6

Further, the selection candidate generation unit 110 can generate the selective-generation reply candidate depending on the user's schedule information acquired as the additional information by the additional information acquisition unit 108. In one example, an event in which the reception message is "Are you free now?" and the user selects, for example, the word "now" from the reception message or selects the full text of the reception message is contemplated. In this event, in the case where the user's current schedule information acquired by the additional information acquisition unit 108 indicates, for example, "being in a meeting", the selection candidate generating unit 110 generates a selective-generation reply candidate including the acquired schedule information, such as "I'm in a meeting.", for example.

### - Generation Example 7

Further, the selection candidate generation unit 110 can generate a selective-generation reply candidate depending on the user's biological information acquired as the additional information by the additional information acquisition unit 108. In one example, an event in which the reception message is "How are you feeling?", and the user selects the word "feeling" from the reception message or selects the full text of the reception message is contemplated. In this event, in the case where the biological information acquired by the additional information acquisition unit 108 indicates, for example, that the user's body temperature is rising and the breathing is faster, the selection candidate generation unit 110 estimates that the physical condition of the user is bad from the acquired biometric information. Then, the selection candidate generation unit 110 generates a selective-generation reply candidate including the predicted result such as "I have a headache.", for example.

Moreover, this generation example 7 is particularly effective for an event in which, for example, an opposite user is a doctor, and a reply message to a medical inquiry message from the doctor is generated.

### - Modification example

Moreover, in a modification example of the selection text acquisition unit 104 described above, that is, in the case where the selection text acquisition unit 104 sequentially acquires other text portions each time the display area of the reception message is scrolled by the user or in the case where other text portions are successively acquired depending on the movement of the user's line of sight, the selection candidate generation unit 110 can generate, each time a new text portion is acquired, a selective-generation reply candidate on the basis of the acquired text portion.

Moreover, in this modification example, each time a new selective-generation replay candidate is generated, the display control unit 102 generates display control information used to display the generated selective-generation reply candidate, and can sequentially update the selective-generation replay candidates displayed on the operation display unit 122 on the basis of the generated display control information.

### [2-1-7. Character input unit 112]

The character input unit 112 accepts an input of a reply text on the basis of a touch operation or a speech input by the user on the touch keyboard displayed on the operation display unit 122. In one example, in the case where the user taps on the displayed touch keyboard, the character input unit 112 accepts a character corresponding to the tapped position as a part of the reply text.

Here, the function described above is described in more detail with reference to FIGS. 7 to 9. FIG. 7 is a diagram illustrated to describe an example of a touch keyboard input screen (a touch keyboard input screen 40) displayed by the display control unit 102. Moreover, the touch keyboard input screen is displayed, for example, on the basis of the user's operation for allowing the user to directly create a reply message in the case where there is no text desired by the user among a plurality of reply candidates displayed on the display screen.

As illustrated in FIG. 7, the touch keyboard input screen 40 includes, for example, a reply text edition column 42, a plurality of touch keys 44, and a plurality of prediction candidates 46. Here, the reply text edition column 42 is a display column of a reply text edited by the user selecting the touch key 44 or the prediction candidate 46. Moreover, FIG. 7 illustrates a display example of an event in which the user inputs "I got " as a reply text.

Further, the touch key 44 is a key used to input one character of a plurality of characters associated with each other. In one example, the touch key 44b shown in FIG. 7 is a key in which three letters of "m", "n", and "o" (or, six characters of "m", "n", "o", "M", "N", and "O") are associated with each other. In addition, the prediction candidate 46 is a candidate of a string such as a word predicted on the basis of the reply text during input.

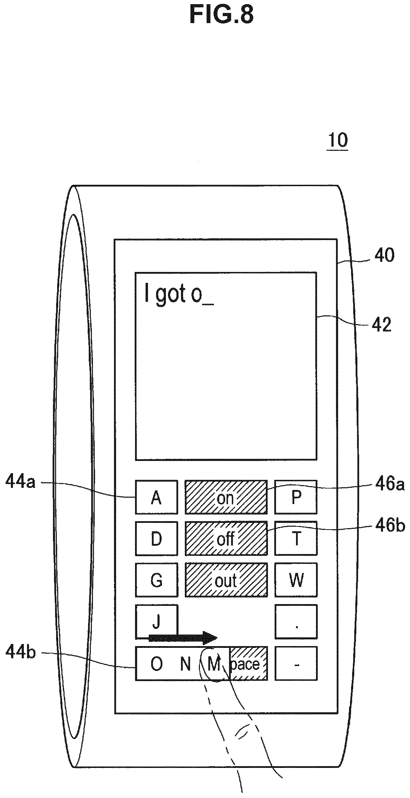

FIG. 8 is a diagram illustrated to describe an example in which the character "o" is input by the user in the state of the touch keyboard input screen 40 shown in FIG. 7. As shown by the arrow in FIG. 8, when the touch key 44b is dragged to the right until the character "o" is displayed in the state in which the user taps his finger on the touch key 44b and then the finger is released, the character "o" is selected. Then, the character input unit 112 accepts the input of the selected character (i.e., "o"). Moreover, as shown in the reply text edition column 42 in FIG. 8, when the character input unit 112 accepts the input of "o", the display control unit 102 causes the character to be displayed in the reply text edition column 42. Furthermore, the display control unit 102 causes the plurality of prediction candidates 46 whose initial letter is "o" as shown in FIG. 8 to be displayed, instead of the plurality of prediction candidates 46 shown in FIG. 7.

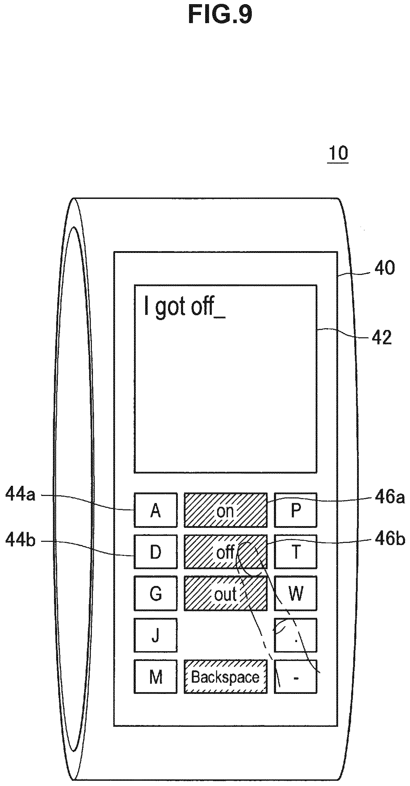

Further, FIG. 9 is a diagram illustrated to describe an example in which the user selects the prediction candidate 46 in the state of the touch keyboard input screen 40 shown in FIG. 8. As illustrated in FIG. 9, when the prediction candidate 46b is tapped by the user, the character input unit 112 accepts the input of a text (i.e., "off") corresponding to the prediction candidate 46b. Moreover, as illustrated in FIG. 9, the display control unit 102 causes the text accepted by the character input unit 112 to be displayed in the reply text edition column 42. In other words, the display control unit 102 adds "ff" at a position immediately after the cursor position shown in FIG. 8 and causes it to be displayed, and then moves the cursor position to a position after the "f" at the end.

The touch keyboard input screen described above associates a plurality of characters with individual touch keys 44, thereby reducing the number of keys included in the touch keyboard (as compared to the known touch keyboard). Thus, a small display can display the individual keys with sufficiently large representation, which allows the user to tap on the key without any difficulty.

Further, it is possible for the user to select easily a desired character from a plurality of characters associated with the touch key 44 by dragging it, thereby reducing the user's operation load.

Further, as illustrated in FIG. 7 for example, the plurality of touch keys 44 are displayed at the left end and the right end, and the plurality of prediction candidates 46 are displayed at the center. According to this display example, even if the display has narrow wide such that normal flick input is difficult, the user can edit the reply text without any difficulty.

### [2-1-8. Transmission control unit 114]

The transmission control unit 114 is an example of a generation unit and a transmission control unit in the present disclosure. The transmission control unit 114 generates a reply message on the basis of the reply candidate selected by the user among the plurality of reply candidates generated by the selection candidate generation unit 110 or the reply text accepted by the character input unit 112. Then, the transmission control unit 114 causes the communication unit 120 to transmit the generated reply message to the information processing terminal 20.

### [2-1-9. Visual position detection unit 116]

The visual position detection unit 116 detects the visual position of the user on the display screen on the basis of an image of the user's face captured by the image capturing unit 126 described later. In one example, the visual position detection unit 116 calculates the relative position of the user's eyes from the image capturing unit 126 from the image of the captured user's face on the basis of the distance between the left eye and the right eye of the user, the size of the face, or the like. Then, the visual position detection unit 116 specifies the line-of-sight direction of the user by performing pattern matching on the imaging area of the eye included in the captured image. Then, the visual position detection unit 116 calculates the visual position of the user on the display screen on the basis of the calculated eye position and the specified line-of-sight direction.

### [2-1-10. Communication unit 120]

The communication unit 120 is an example of a transmitter in the present disclosure. The communication unit 120 exchanges information with the information processing terminal 20, for example, via the communication network 22. In one example, the communication unit 120 receives a message from the information processing terminal 20. In addition, the communication unit 120 transmits a reply message to the information processing terminal 20 under the control of the transmission control unit 114.

### [2-1-11. Operation display unit 122]

The operation display unit 122 is composed of, for example, a touch panel display. The operation display unit 122 displays a display screen including various information such as reception messages or reply candidates under the control of the display control unit 102. In addition, the operation display unit 122 accepts various inputs by the user such as selection of a reply candidate displayed on the display screen.

### [2-1-12. Measurement unit 124]

The measurement unit 124 measures various types of information such as position information, acceleration information, and biological information by using, for example, a GPS receiver 168, an acceleration sensor 170, and a biological information sensor 172, respectively, described later.

### [2-1-13. Image capturing unit 126]

The image capturing unit 126 captures the external environment, for example, under the control of the visual position detection unit 116.

### [2-1-14. Storage unit 128]

The storage unit 128 can store, for example, various data and software such as the selection history DB 130.

Moreover, the configuration of the wristwatch type device 10 according to the present embodiment is not limited to the above-described configuration. In one example, the display control unit 102 and the selection candidate generation unit 110 may be integrally configured. In addition, the selection history DB 130 can be stored in another device connected to the communication network 22, instead of being stored in the storage unit 128. In addition, none of the visual position detection unit 116 and the image capturing unit 126 may be included in the wristwatch type device 10.

### <2-2. Operation>

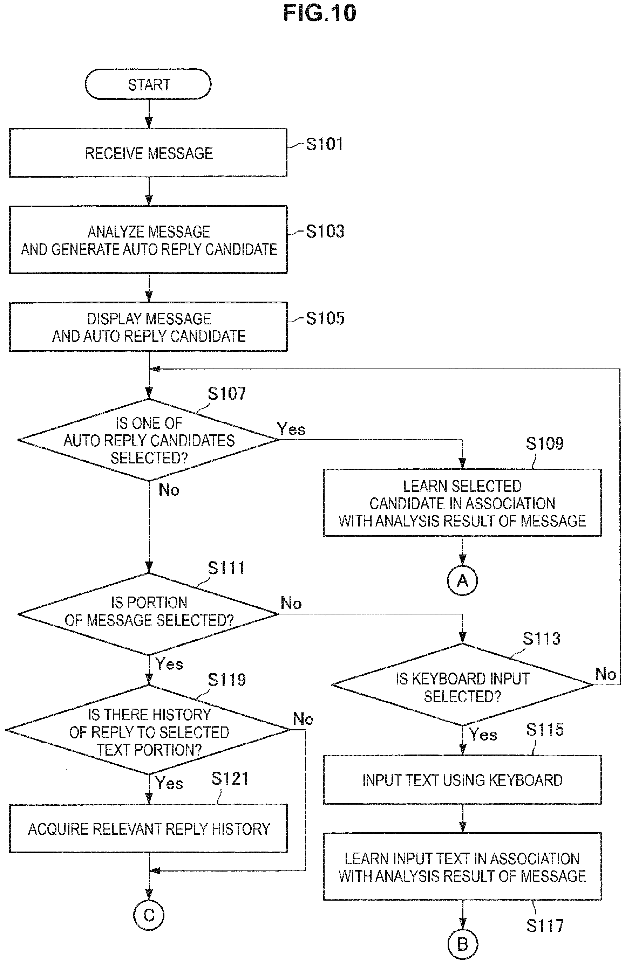

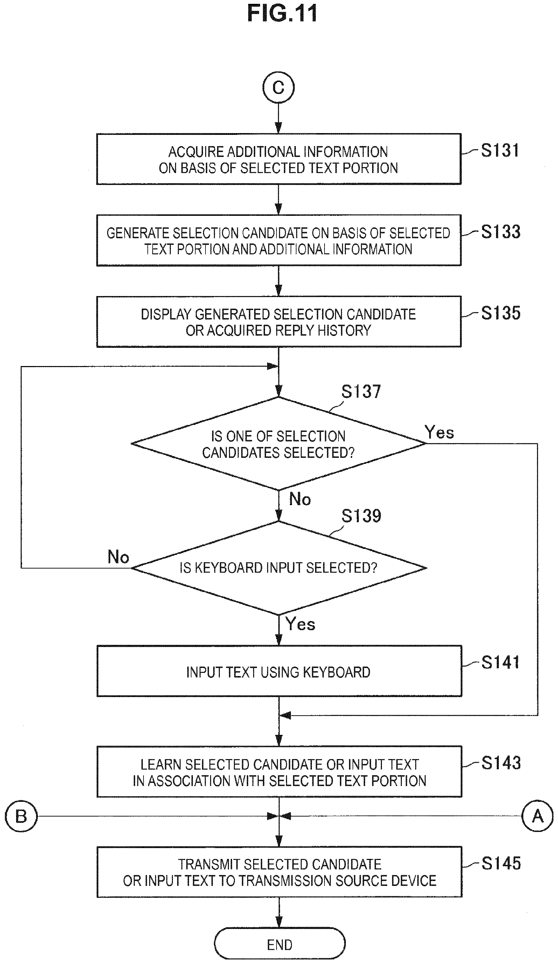

The configuration according to the present embodiment has been described. Subsequently, the operation according to the present embodiment is described with reference to FIGS. 10 and 11.

FIG. 10 is a flowchart showing a part of the operation according to the present embodiment. As shown in FIG. 10, the communication unit 120 of the wristwatch type device 10 receives a message from the information processing terminal 20 (S101).

Subsequently, the selection candidate generation unit 110 analyzes the reception message received in S101 and generates one or more auto-generation reply candidates depending on the analysis result (S103).

Subsequently, the display control unit 102 causes the operation display unit 122 to display the reception message received in S101. Furthermore, the display control unit 102 generates display control information used to display the auto-generation reply candidate generated in S103, and then causes the operation display unit 122 to display the auto-generation reply candidate on the basis of the generated display control information (S105).

Subsequently, the control unit 100 determines whether the user selects one of the one or more auto-generation reply candidates displayed in S105 (S107). If the user selects one of the auto-generation reply candidates (Yes in S107), the control unit 100 associates the selected auto-generation reply candidate with the analysis result of the reception message in S103, and records the resultant in the selection history DB 130 (S109). Then, the control unit 100 performs the operation of S139 described later.

On the other hand, if the user does not select any of the auto-generation reply candidates (No in S107), then the control unit 100 determines whether the user selects any text portion included in the displayed reception message (S111). If the user does not select any of the text portions (No in S111), then the control unit 100 determines whether the user selects the touch keyboard input button (S113). If the user does not select the touch keyboard input button (No in S113), the control unit 100 repeats the operations of S107 and the subsequent steps.

On the other hand, if the touch keyboard input button is selected by the user (Yes in S113), the display control unit 102 causes the operation display unit 122 to display the touch keyboard input screen as illustrated in FIG. 7, for example. Then, the character input unit 112 accepts the reply text input by the user on the touch keyboard input screen (S115).

Subsequently, the control unit 100 records the reply text input in S115 in the selection history DB 130 in association with the analysis result of the reception message in S103 (S117). Then, the control unit 100 performs the operation of S139 described later.

If the user selects any text portion included in the reception message in S111 (Yes in S111), the selection text acquisition unit 104 acquires the selected text portion. Then, the selection history acquisition unit 106 checks whether there is a history of the reply message transmitted previously in association with the acquired text portion (S119).

If there is a history of the reply message (Yes in S119), the selection history acquisition unit 106 acquires the reply message from the selection history DB 130. Then, the selection candidate generation unit 110 generates individual reply messages included in the acquired history as the selective-generation reply candidate (S121). Then, the wristwatch type device 10 performs the operation of S131 described later.

Next, the operations following S121 are described with reference to FIG. 11. If there is no history of the reply message in S119 (No in S119), as illustrated in FIG. 11, the additional information acquisition unit 108 acquires additional information of an attribute depending on the text portion acquired by the selection text acquisition unit 104 (S131).

Subsequently, the selection candidate generation unit 110 generates one or more selective-generation reply candidates on the basis of the text portion acquired in S111 and the additional information acquired in S131 (S133).

Subsequently, the display control unit 102 generates display control information used to display the selective-generation reply candidate generated in S121 and S133. Then, the display control unit 102 causes the operation display unit 122 to display the selective-generation reply candidate (instead of the auto-generation reply candidate being displayed) on the basis of the generated display control information (S135).

Subsequently, the control unit 100 determines whether the user selects one of the one or more selective-generation reply candidates displayed in S135 (S137). If the user selects one of selective-generation reply candidates (Yes in S137), the control unit 100 performs the operation of S143 described later.

On the other hand, if none of the selective-generation reply candidates is selected (No in S137), then the control unit 100 determines whether the user selects the touch keyboard input button (S139). If the user does not select the touch keyboard input button (No in S139), the control unit 100 repeats the operation of S137.

If the user selects the touch keyboard input button (Yes in S139), the display control unit 102 causes the operation display unit 122 to display the touch keyboard input screen. Then, the character input unit 112 accepts the reply text input by the user on the touch keyboard input screen (S141).

Subsequently, the control unit 100 records the selective-generation reply candidate selected in S137 or the reply text input in S141 in the selection history DB 130 in association with the text portion acquired in S111 (S143).

Subsequently, the transmission control unit 114 generates a reply message on the basis of the reply candidate selected in S107 or S137 or on the basis of the reply text input in S115 or S141. Then, the transmission control unit 114 causes the communication unit 120 to transmit the generated reply message to the information processing terminal 20 (S145).

### <2-3. Advantageous effects>

### [2-3-1. Advantageous effect 1]

As described above with reference to FIGS. 2, 10 and 11, for example, the wristwatch type device 10 according to the present embodiment acquires the text portion selected by the user from the reception message received from the information processing terminal 20. Then, the wristwatch type device 10 generates display control information used to display the plurality of selective-generation reply candidates on the basis of the acquired text portion.

For this reason, the reply candidate adapted to the text portion selected by the user from the reception message is displayed, and so the desired reply candidate incorporating the user's intention is displayed. Then, it is possible for the user to complete a desired replay message by only selecting the desired reply candidate from among the plurality of reply candidates displayed on the display screen, for example by tapping.

This reduces the necessity for the user to input directly a reply message by the touch keyboard or speech, for example, as compared to the known technique, and so the workload of the user in creating the reply message is reduced.

### [2-3-2. Advantageous effect 2]

Further, the wristwatch type device 10 generates the selective-generation reply candidate on the basis of additional information of an attribute depending on the text portion selected by the user. Thus, the reply candidate including the position information, the date and time information, and the like which the user desires to input is more likely to be displayed automatically. This reduces the necessity for the user to input these pieces of information by the touch keyboard or speech, and thus the workload is further reduced.

Further, it is possible for the user to select a desired reply candidate from among the plurality of displayed reply candidates and then to modify a text of the selected reply candidate by using, for example, the touch keyboard or speech input. This makes it possible for the user to complete a desirable reply message with fewer times of operations.

### [2-3-3. Advantageous effect 3]

Further, the wristwatch type device 10 records the text portion selected by the user and the reply candidate selected by the user in association with each other in the selection history DB 130. Thus, in the case where a newly reception message includes a text portion that is the same as or similar to the text portion selected previously, the wristwatch type device 10 can preferentially display the associated reply candidate recorded in the selection history DB 130. Thus, the history increases as the number of message replies increases, and thus the probability of displaying the desired reply candidate to the user is improved.

### «3. Hardware configuration»

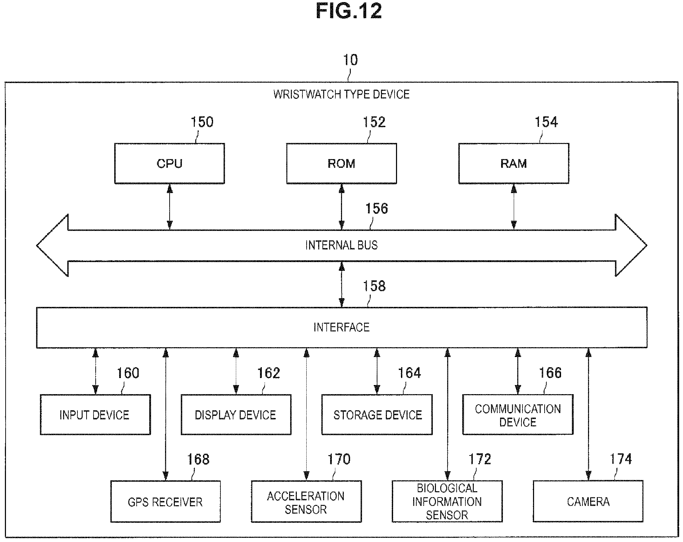

Next, the hardware configuration of the wristwatch type device 10 according to the present embodiment is described with reference to FIG. 12. As illustrated in FIG. 12, the wristwatch type device 10 is configured to include a CPU 150, a read only memory (ROM) 152, a RAM 154, an internal bus 156, an interface 158, an input device 160, a display device 162, a storage device 164, a communication device 166, a GPS receiver 168, an acceleration sensor 170, a biological information sensor 172, and a camera 174.

### <3-1. CPU 150>

The CPU 150 functions as an arithmetic processing unit and a control unit, and controls the overall operation in the wristwatch type device 10 in accordance with various programs. In addition, the CPU 150 implements the function of the control unit 100 in the wristwatch type device 10. Moreover, the CPU 150 is composed of a processor such as a microprocessor.

### <3-2. ROM 152>

The ROM 152 stores control data such as programs or operation parameters to be used by the CPU 150.

### <3-3. RAM 154>

The RAM 154 temporarily stores, for example, a program to be executed by the CPU 150.

### <3-4. Internal bus 156>

The internal bus 156 is composed of a CPU bus or the like. The internal bus 156 mutually connects the CPU 150, the ROM 152, and the RAM 154.

### <3-5. Interface 158>

The interface 158 connects the input device 160, the display device 162, the storage device 164, the communication device 166, the GPS receiver 168, the acceleration sensor 170, the biological information sensor 172, and the camera 174 to the internal bus 156. In one example, the storage device 164 exchanges data with the CPU 150 via the interface 158 and the internal bus 156.

### <3-6. Input device 160 and display device 162>

The input device 160 and the display device 162 are configured as an example of the operation display unit 122. The input device 160 is composed of input means, such as a touch panel, a button, a microphone, and a switch, for allowing a user to input information, and an input control circuit for generating an input signal on the basis of an input by the user and outputting the input signal to the CPU 150.

Further, the display device 162 includes, for example, a liquid crystal display (LCD) device, an organic light emitting diode (OLED) device, a lamp, and the like.

### <3-7. Storage device 164>

The storage device 164 is a device for storing data, which functions as the storage unit 128. The storage device 164 includes, for example, a storage medium, a recording device for recording data in the storage medium, a reading device for reading data from the storage medium, a deletion device for deleting data recorded in the storage medium, or the like.

### <3-8. Communication device 166>

The communication device 166 is a communication interface composed of a communication device or the like for connecting to a communication network such as a public network or the Internet. In addition, the communication device 166 may be a wireless LAN compatible communication device, a long-term evolution (LTE) compatible communication device, or a wire communication device that performs wired communication. This communication device 166 functions as the communication unit 120.

### <3-9. GPS receiver 168>

The GPS receiver 168 receives a positioning signal from a positioning satellite, such as GPS or GLONASS, and measures the current position. Moreover, the GPS receiver 168 can perform positioning by receiving a positioning signal from one type of satellite, and can further perform positioning by receiving a positioning signal from a plurality of types of satellites and combining the received signals. This GPS receiver 168 functions as the measurement unit 124.

### <3-10. Acceleration sensor 170>

The acceleration sensor 170 measures the acceleration of the wristwatch type device 10. This acceleration sensor 170 functions as the measurement unit 124.

### <3-11. Biological information sensor 172>

The biological information sensor 172 measures, for example, a pulse, a breathing pattern, a body temperature, myoelectricity, a brain wave, or the like of a user who wears the wristwatch type device 10. This biological information sensor 172 functions as the measurement unit 124.

### <3-12. Camera 174>

The camera 174 has a function of imaging an external image through a lens onto an image sensor, such as charge-coupled device (CCD) or complementary-metal-oxide semiconductor (CMOS), to photograph a still image or a moving image. This camera 174 functions as the image capturing unit 126.

### «4. Modification examples»

The preferred embodiment(s) of the present disclosure has/have been described above with reference to the accompanying drawings, whilst the present disclosure is not limited to the above examples. A person skilled in the art may find various alterations and modification embodiments within the scope of the appended claims, and it should be understood that they will naturally come under the technical scope of the present disclosure.

### <4-1. Modification example 1>

In one example, although the above description is given as to the example in which the display control unit 102 causes only the text generated as a reply candidate by the selection candidate generation unit 110 to be displayed on the display screen, the display control unit 102 is not limited to this example. In one example, the display control unit 102 may cause the text of the selective-generation reply candidate generated by the selection candidate generation unit 110 and the additional information acquired by the additional information acquisition unit 108 to be displayed together on the display screen. In one example, the display control unit 102 causes the selective-generation reply candidate of "I'm here." generated by the selection candidate generation unit 110 and the map information such as a map image acquired by the additional information acquisition unit 108 to be displayed by arranging them side by side.

### <4-2. Modification example 2>

Further, although the above description is given as to the example in which the selection candidate generation unit 110, when generating the selective-generation reply candidate, uses the additional information acquired by the additional information acquisition unit 108, the selection candidate generation unit 110 is not limited to this example. In one example, the selection candidate generation unit 110, when generating the auto-generation reply candidate, can further use the additional information acquired by the additional information acquisition unit 108. More specifically, the selection candidate generation unit 110 can generate an auto-generation reply candidate on the basis of the received message (full text) and the additional information acquired by the additional information acquisition unit 108.

### <4-3. Modification example 3>

### [4-3-1. Example of being terminal having large display]

Further, although the above description is given as to the example in which the information processing device according to the present disclosure is a wristwatch type device in the above-described embodiment, the present disclosure is not limited to this example. The information processing device according to the present disclosure may be, for example, a mobile phone such as smartphone or a tablet terminal.

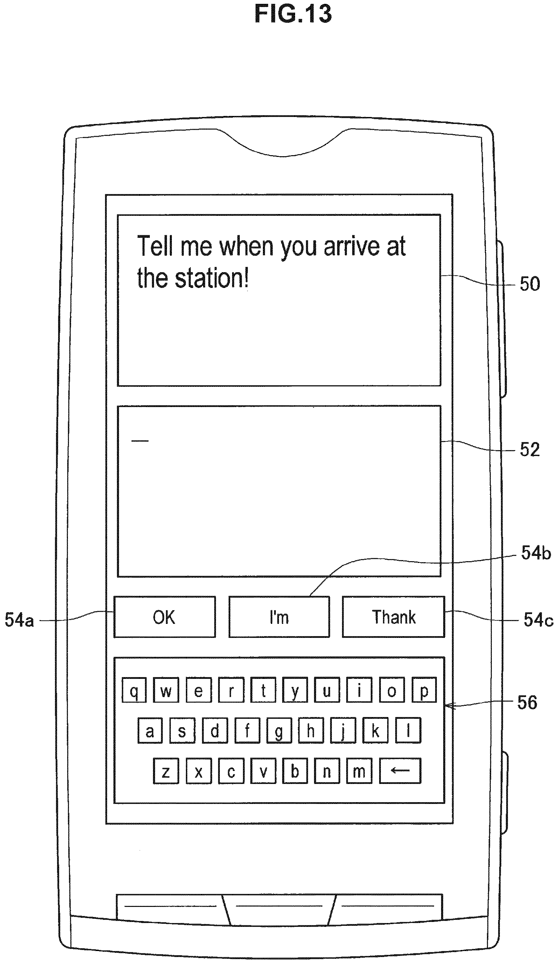

The smartphone or the tablet terminal typically has a display larger than the wristwatch type device. Thus, the display control unit 102 may causes a display screen (a type of touch panel) including more kinds of display areas, instead of the display screen 30 shown in FIG. 3, to be displayed on a display, for example as illustrated in FIG. 13.

The display screen shown in FIG. 13 includes, for example, a reception message display column 50, a reply text edition column 52, a plurality of reply candidate selection windows 54, and a touch keyboard 56. Here, the reception message display column 50 is an area for displaying a message received from the information processing terminal 20. In addition, the reply text edition column 52 is a display column of a reply text edited by the user who selects the reply candidate selection window 54 or taps on the touch keyboard 56. In addition, the reply candidate selection window 54 is a selection display for allowing the user to select the reply candidate generated by the selection candidate generation unit 110. In addition, the touch keyboard 56 is a software keyboard including a plurality of character keys.

According to this display example, it is possible to display the plurality of reply candidate selection windows 54 and the touch keyboard 56 together. Thus, unlike the display screen 30 shown in FIG. 3, the user can edit the reply text without switching the input mode. In one example, the user can modify the text of the selected reply candidate to be displayed in the reply text edit section 52 using the touch keyboard (without switching the input mode) after selecting a reply candidate. This increases the user's convenience.

### [4-3-2. Example of being server device]

Alternatively, the information processing device according to the present disclosure may be a server device. The server device according to this modification example is configured to include, for example, all the components included in the control unit 100 and the communication unit 120 in the embodiment described above. In addition, in this modification example, the operation display unit 122 and the measurement unit 124 are configured as an integrated device that can be carried by the user (hereinafter referred to as a portable device) and carried by the user. In addition, the server device according to this modification example is configured to be capable of communicating with the portable device, for example, via the communication network 22.

### [4-3-3. Others]

Further, the information processing device according to the present disclosure is not limited to the above example, and may be, for example, a game console, a television receiver, a projection display, or the like.

### <4-4. Modification example 4>

Further, although the above description is mainly given as to the example in which the wristwatch type device 10 is applied to an event where a reply message to a received message is generated, the present disclosure is not limited to this example. In one example, the wristwatch type device 10 may be applied to an event of generating a post comment on the text included in a web page received from another device connected to the communication network 22.

Alternatively, an event of generating a comment on image data such as a photographed image received from the information processing terminal 20 may be applied. Moreover, in this case, the wristwatch type device 10 may extract information from the image data by, for example, suitable object recognition engine, and may present the extracted information to the user so that the user can select it. Then, the wristwatch type device 10 can automatically generate a candidate of the comment on the basis of the information selected by the user.

### <4-5. Modification example 5>

Further, according to the present embodiment, it is also possible to provide a computer program for causing hardware, such as the CPU 150, the ROM 152, and the RAM 154, to execute functions equivalent to those of the configuration of the above-described wristwatch type device 10. In addition, a recording medium on which the computer program is recorded is also provided.

Additionally, the present technology may also be configured as below.
(1) An information processing device including:
   a selection information acquisition unit configured to acquire partial information selected by a first user from first information received from another device; and
   a display control unit configured to generate display control information used to display a selection candidate relating to the first information on the basis of the acquired partial information.
(2) The information processing device according to (1), further including:
   an additional information acquisition unit configured to acquire additional information depending on the acquired partial information,
   wherein the display control unit generates the display control information further on the basis of the additional information acquired by the additional information acquisition unit.
(3) The information processing device according to (2),
   wherein the additional information includes position information indicating a position of the first user.
(4) The information processing device according to (2) or (3),
   wherein the additional information includes current time information.
(5) The information processing device according to any one of (2) to (4),
   wherein the additional information includes information indicating a relationship between the first user and a second user using the other device.
(6) The information processing device according to any one of (2) to (6),
   wherein the additional information includes a history of input information by the first user in a predetermined service.
(7) The information processing device according to any one of (2) to (6),
   wherein the additional information includes a result obtained by recognizing an action of the first user.
(8) The information processing device according to any one of (2) to (7),
   wherein the additional information includes schedule information of the first user.
(9) The information processing device according to any one of (2) to (8),
   wherein the additional information includes biological information of the first user.
(10) The information processing device according to any one of (2) to (9),
   wherein the additional information includes a selection candidate selected previously by the first user as a response to second information received from the other device before reception of the first information.
(11) The information processing device according to any one of (1) to (10), further including:
   a selection history acquisition unit configured to acquire a history of a selection candidate selected previously by the first user, the history of the selection candidate being recorded in a database in association with information depending on the acquired partial information,
   wherein the display control unit generates the display control information further on the basis of the history of the selection candidate acquired by the selection history acquisition unit.
(12) The information processing device according to (11),
   wherein the display control information is information used to display the history of the selection candidate acquired by the selection history acquisition unit as a selection candidate relating to the first information.
(13) The information processing device according to any one of (1) to (12),
   wherein the display control information is information used to display a plurality of selection candidates relating to the first information, and
   the information processing device further includes a transmission control unit configured to cause a transmitter to transmit a selection candidate selected by the first user from among the displayed plurality of selection candidates to the other device.
(14) The information processing device according to any one of (1) to (13),
   wherein the display control unit further causes the first information to be displayed on a display screen, and
   the selection information acquisition unit acquires the partial information on the basis of a touch operation by the first user on the display screen.
(15) The information processing device according to (14),
   wherein the touch operation is a scrolling operation.
(16) The information processing device according to any one of (1) to (13),
   wherein the display control unit further causes the first information to be displayed on a display screen,
   the information processing device further includes a visual position detection unit configured to detect a visual position of the first user on the display screen, and
   the selection information acquisition unit acquires the partial information on the basis of the detected visual position.
(17) The information processing device according to any one of (1) to (16),
   wherein the first information and the selection candidate are text.
(18) The information processing device according to any one of (1) to (17), further including:
   a generation unit configured to generate text information including information used to be correlated with the first information on the basis of a selection candidate selected by the first user from among displayed selection candidates.
(19) A method of information processing, the method including:
   acquiring partial information selected by a first user from first information received from another device; and
   generating display control information used to display a selection candidate relating to the first information on the basis of the acquired partial information.
(20) A program for causing a computer to function as:
   a selection information acquisition unit configured to acquire partial information selected by a first user from first information received from another device; and
   a display control unit configured to generate display control information used to display a selection candidate relating to the first information on the basis of the acquired partial information.

### Reference Signs List

- 10: wristwatch type device
- 20: information processing terminal
- 22: communication network
- 100: control unit
- 102: display control unit
- 104: selection text acquisition unit
- 106: selection history acquisition unit
- 108: additional information acquisition unit
- 110: selection candidate generation unit
- 112: character input unit
- 114: transmission control unit
- 116: visual position detection unit
- 120: communication unit
- 122: operation display unit
- 124: measurement unit
- 126: image capturing unit
- 128: storage unit
- 130: selection history DB

## Claims

1. An information processing device comprising:
a selection information acquisition unit configured to acquire partial information selected by a first user from first information received from another device; and
a display control unit configured to generate display control information used to display a selection candidate relating to the first information on the basis of the acquired partial information.

2. The information processing device according to claim 1, further comprising:
an additional information acquisition unit configured to acquire additional information depending on the acquired partial information,
wherein the display control unit generates the display control information further on the basis of the additional information acquired by the additional information acquisition unit.

3. The information processing device according to claim 2,
wherein the additional information includes position information indicating a position of the first user.

4. The information processing device according to claim 2,
wherein the additional information includes current time information.

5. The information processing device according to claim 2,
wherein the additional information includes information indicating a relationship between the first user and a second user using the other device.

6. The information processing device according to claim 2,
wherein the additional information includes a history of input information by the first user in a predetermined service.

7. The information processing device according to claim 2,
wherein the additional information includes a result obtained by recognizing an action of the first user.

8. The information processing device according to claim 2, wherein the additional information includes schedule information of the first user.

9. The information processing device according to claim 2,
wherein the additional information includes biological information of the first user.

10. The information processing device according to claim 2,
wherein the additional information includes a selection candidate selected previously by the first user as a response to second information received from the other device before reception of the first information.

11. The information processing device according to claim 1, further comprising:
a selection history acquisition unit configured to acquire a history of a selection candidate selected previously by the first user, the history of the selection candidate being recorded in a database in association with information depending on the acquired partial information,
wherein the display control unit generates the display control information further on the basis of the history of the selection candidate acquired by the selection history acquisition unit.

12. The information processing device according to claim 11,
wherein the display control information is information used to display the history of the selection candidate acquired by the selection history acquisition unit as a selection candidate relating to the first information.

13. The information processing device according to claim 1,
wherein the display control information is information used to display a plurality of selection candidates relating to the first information, and
the information processing device further includes a transmission control unit configured to cause a transmitter to transmit a selection candidate selected by the first user from among the displayed plurality of selection candidates to the other device.

14. The information processing device according to claim 1,
wherein the display control unit further causes the first information to be displayed on a display screen, and
the selection information acquisition unit acquires the partial information on the basis of a touch operation by the first user on the display screen.

15. The information processing device according to claim 14,
wherein the touch operation is a scrolling operation.

16. The information processing device according to claim 1,
wherein the display control unit further causes the first information to be displayed on a display screen,
the information processing device further includes a visual position detection unit configured to detect a visual position of the first user on the display screen, and
the selection information acquisition unit acquires the partial information on the basis of the detected visual position.

17. The information processing device according to claim 1,
wherein the first information and the selection candidate are text.

18. The information processing device according to claim 1, further comprising:
a generation unit configured to generate text information including information used to be correlated with the first information on the basis of a selection candidate selected by the first user from among displayed selection candidates.

19. A method of information processing, the method comprising:
acquiring partial information selected by a first user from first information received from another device; and
generating display control information used to display a selection candidate relating to the first information on the basis of the acquired partial information.

20. A program for causing a computer to function as:
a selection information acquisition unit configured to acquire partial information selected by a first user from first information received from another device; and
a display control unit configured to generate display control information used to display a selection candidate relating to the first information on the basis of the acquired partial information.
